# EUROPÄISCHE PATENTSCHRIFT

(11) **EP 2 890 589 B1**
(45) Veröffentlichungstag und Bekanntmachung des Hinweises auf die Patenterteilung: **05.01.2022**
(21) Anmeldenummer: 13753125.7
(22) Anmeldetag: 14.08.2013
(51) Int. Cl.: B60Q 3/80

(54) **VERFAHREN UND VORRICHTUNG ZUR EINSTELLUNG DER BELEUCHTUNG DES INNENRAUMS EINES FORTBEWEGUNGSMITTELS**
METHOD AND DEVICE FOR SETTING THE ILLUMINATION OF THE INTERIOR OF A MEANS OF TRANSPORTATION
PROCÉDÉ ET DISPOSITIF DE RÉGLAGE DE L'ÉCLAIRAGE DE L'ESPACE INTÉRIEUR D'UN MOYEN DE TRANSPORT

(30) Priorität: 30.08.2012 DE 102012017147; 08.12.2012 DE 102012024042
(43) Veröffentlichungstag der Anmeldung: 08.07.2015
(73) Patentinhaber: Volkswagen Aktiengesellschaft, 38440 Wolfsburg (DE)
(72) Erfinder: BÖHME, Arndt, 38518 Gifhorn (DE); IMMIG, Ralf, 10247 Berlin (DE); HAUBENREISSER, Sebastian, 10367 Berlin (DE); STURMAT, Sandra, 38102 Braunschweig (DE)
(86) Internationale Anmeldenummer: PCT/EP2013/066974
(87) Internationale Veröffentlichungsnummer: WO 2014/032971

(56) Entgegenhaltungen:
- EP-A1- 0 770 519
- EP-A1- 1 884 408
- EP-A1- 2 384 933
- EP-A2- 2 394 852
- WO-A1-2009/089109
- WO-A1-2012/056799
- DE-A1- 4 235 826
- DE-A1- 10 318 356
- DE-A1-102005 040 113
- DE-A1-102007 039 677
- GB-A- 2 293 443
- US-A- 4 866 345
- US-A- 5 254 907
- US-B1- 6 402 354

## Beschreibung

Die vorliegende Erfindung betrifft ein Verfahren zur Einstellung der Beleuchtung des Innenraums eines Fortbewegungsmittels gemäß dem Oberbegriff des Anspruchs 1, eine Vorrichtung zur Durchführung eines derartigen Verfahrens und ein Fortbewegungsmittel mit einer derartigen Vorrichtung.

Es wird zunehmend ein gesteigerter Wert auf die Beleuchtung von Fortbewegungsmitteln wie z.B. Fahrzeugen gelegt, d.h. auf die Beleuchtung des Innenraums eines Fahrzeugs oder auch dessen unmittelbaren Außenbereichs, um den Komfort für den Nutzer zu erhöhen. So werden mittels Lichtkonzepten verschiedene Lichtquellen im Inneren des Fahrzeugs genutzt, um in bestimmten Situationen bzw. Fahrzeugzuständen den gesamten Innenraum oder auch nur bestimmte Teilbereiche (Zonen) in einer vorgegebenen oder wählbaren Intensität, ggfs. auch Farbe, zu beleuchten. Zu diesen Bereichen des Innenraums gehören z.B. der Fußraum, die Türen, der Kofferraum-, Ladeflächen- bzw. Heckklappenbereich, der Dachraum, der Dachhimmel, der Bereich der Mittelkonsole bzw. sonstiger Konsolen, des Cockpits, der Sitze etc. Ebenso können z.B. die Türaußengriffe in bestimmten Situationen erleuchtet werden, um diese im Dunkeln besser auffinden zu können, oder das Umfeld des Fahrzeugs, insbesondere der Türen, durch die Beleuchtung der Außenspiegel.

Die EP 2 079 608 B1 betrifft ein Verfahren zum Beleuchten des Innenraums eines Fahrzeugs. Es wird in Abhängigkeit von Zuständen des Fahrzeugs zwischen verschiedenen Betriebsmodi bzw. Intensitätsstufen der Innenbeleuchtung umgeschaltet. So wird in einem Modus der Innenraum des Fahrzeugs vollständig ausgeleuchtet, z.B. im Ansprechen auf eine Annährung des Fahrers an das Fahrzeug. Wird eine Fahrzeugtür geöffnet, wird im Ansprechen hierauf in einen weiteren Modus gewechselt, der die Innenbeleuchtung auf ein angenehmes Maß reduziert. Wird der Zustand des Fahrzeugs aus dem Parkmodus heraus in Bewegung versetzt, wird im Ansprechen hierauf in einen weiteren Modus der Beleuchtung gewechselt, so dass die Innenraumbeleuchtung die Fahrzeugführung nicht beeinträchtigt.

EP 1 884 408 A1 offenbart ein Kraftfahrzeug mit einer Beleuchtungseinrichtung, bei welcher im Ansprechen auf vorgegebene Informationssignale eine zeitverzögerte Schaltfolge von Beleuchtungseinrichtungen im Innenraum gestartet wird. Optional werden Farbwechsel von der Beleuchtungseinrichtung ausgeschütteten Lichtes vorgenommen.

GB 2 293 443 A offenbart ein Beleuchtungssystem für die Kabine eines Flugzeugs, durch welches tageszeitbedingte Beleuchtungszustände hergestellt werden können. Die Zeitfolge der Beleuchtungszustände ist entsprechend einer zu erwartenden Flugdauer konfigurierbar.

WO 2009/089109 A1 offenbart ein Beleuchtungssystem für das Interieur eines Kraftfahrzeugs, welches eine Lichtverteilung mittels Lichtleitern vornimmt. In einem Ausführungsbeispiel wird vorgeschlagen, die Aktivierung oder Deaktivierung im Ansprechen auf Fahrzeugereignisse, wie z.B. das Einschalten des Abblendlichtes, vorzunehmen.

Den bekannten Verfahren ist dabei gemeinsam, dass ein Wechsel zwischen den verschiedenen Beleuchtungseinstellungen, Betriebsmodi bzw. Intensitätsstufen der Innenbeleuchtung bisher ausschließlich im direkten Ansprechen auf ein Ereignis, z.B. ein benutzerbedingtes Ereignis wie das Entriegeln einer Tür, das Öffnen einer Tür, das Schließen einer Tür, das Starten des Motors, das Anwählen des Fahrmodus einer Automatikschaltung etc. erfolgt. Dies führt zu Einschränkungen bei der Konzeption von Beleuchtungseinstellungen für Fahrzeuge.

Es ist daher eine Aufgabe der vorliegenden Erfindung, das Einstiegserlebnis in Verbindung mit einem Fahrzeug zu verbessern.

Die vorstehend genannte Aufgabe wird erfindungsgemäß durch ein Verfahren mit den Merkmalen gemäß Anspruch 1, eine Vorrichtung mit den Merkmalen gemäß Anspruch 8 und ein Fahrzeug mit den Merkmalen nach Anspruch 9 gelöst. Die Unteransprüche und Figuren zeigen bevorzugte Weiterbildungen der Erfindung.

Demnach betrifft die vorliegende Erfindung ein Verfahren zur Einstellung der Beleuchtung des Innenraums eines Fortbewegungsmittels mit den Schritten:
- Ausführen einer ersten Beleuchtungseinstellung und
- Ausführen einer zweiten Beleuchtungseinstellung, welche wenigstens ein Betreiben eines Beleuchtungsmittels umfasst, das eine gegenüber der ersten Beleuchtungseinstellung veränderte Helligkeit, Farbe und bzw. oder Frequenz aufweist,
wobei der Wechsel von der ersten Beleuchtungseinstellung in die zweite Beleuchtungseinstellung in Abhängigkeit einer Einstellung der Außenbeleuchtung des Fortbewegungsmittels und nach Ablauf einer vorbestimmten Zeitspanne erfolgt.

Unter einer Beleuchtungseinstellung ist ein Betriebszustand einiger oder aller Beleuchtungsmittel des Fahrzeugs zu verstehen, die eingesetzt werden können, den Innenraum zu beleuchten. Dabei kann eine Beleuchtungseinstellung sowohl die Aktivierung bzw. Deaktivierung einzelner Beleuchtungsmittel umfassen sowie auch die Einstellung der Intensität, d.h. Helligkeit, der aktivierten Beleuchtungsmittel. Ist ein Beleuchtungsmittel in der Farbe verstellbar, kann auch die Wahl der Farbe zur Beleuchtungseinstellung gehören. Ist ein Beleuchtungsmittel in der Frequenz veränderbar, d.h. kann es z.B. Pulsieren, Blinken etc., so kann auch diese Funktion sowie die Wahl bzw. Veränderung der Frequenz zur Beleuchtungseinstellung gehören. Mehrere Beleuchtungsmittel können dabei in Beleuchtungsbereiche oder-zonen zusammengefasst und einheitlich behandelt werden, d.h. gemeinsam aktiviert bzw. deaktiviert und bzw. oder in der Helligkeit, Farbe und bzw. oder Frequenz verändert werden. Die vollständige Deaktivierung aller Beleuchtungsmittel wird ebenfalls als eine Beleuchtungseinstellung angesehen; das Betreiben eines Beleuchtungsmittels schließt dessen Deaktivierung aus. Dabei erfolgt der Wechsel zwischen zwei Beleuchtungseinstellung dadurch, dass alle betroffenen Beleuchtungsmittel gemäß der folgenden Beleuchtungseinstellung angesteuert, d.h. jeweils aktiviert, deaktiviert, in der Helligkeit, Farbe und bzw. oder Frequenz eingestellt werden.

Die Veränderung der Helligkeit, Farbe und bzw. oder Frequenz wenigstens eines Beleuchtungsmittels beinhaltet auch dessen Einschalten, d.h. die Aktivierung eines Beleuchtungsmittels in der zweiten Beleuchtungseinstellung, welches in der ersten Beleuchtungseinstellung deaktiviert war. Ebenso kann ein gedimmtes Beleuchtungsmittel in der zweiten Beleuchtungseinstellung gegenüber der ersten Beleuchtungseinstellung in seiner Intensität erhöht werden. Auch können gleichzeitig andere Beleuchtungsmittel in der zweiten Beleuchtungseinstellung gegenüber der ersten Beleuchtungseinstellung in ihrer Helligkeit reduziert, vollständig deaktiviert oder in der Farbe bzw. Frequenz verändert werden.

Erfindungsgemäß kommt es darauf an, in der zweiten Beleuchtungseinstellung wenigstens ein Beleuchtungsmittel zu betreiben, d.h. aktiviert zu haben, welches in der ersten Beleuchtungseinstellung nicht betrieben wurde, d.h. deaktiviert war, oder ein Beleuchtungsmittel in der ersten Beleuchtungseinstellung mit einer ersten Intensität, Farbe und bzw. oder Frequenz zu betreiben und in der zweiten Beleuchtungseinstellung mit einer zweiten Intensität, Farbe und bzw. oder Frequenz. Gleichzeitig hat der Wechsel zwischen den beiden Beleuchtungseinstellungen nach Ablauf einer vorbestimmten Zeitspanne zu erfolgen.

Von der vorliegenden Offenbarung wird neben der Beleuchtung des Innenraums eines Fahrzeugs auch die Beleuchtung des Fahrzeugumfeldes durch Beleuchtungsmittel z.B. in den Türaußenriffen sowie den Außenspiegeln umfasst, d.h. jegliche Fahrzeugbeleuchtung, die bei einem Fahrzeug verwendet werden kann, dessen Äußeres zu erhellen und das Fahrzeug selbst sowie insbesondere dessen Türen und Türaußengriffe bzw. Kofferraumklappe, Heckklappe oder Ladefläche und ggfs. dessen Betätigungsmechanismen im Dunkeln besser auffindbar zu machen.

Der vorliegenden Erfindung liegt die Erkenntnis zugrunde, dass die Gestaltungsfreiheit der Lichtkonzepte zur Beleuchtung des Innenraums bzw. der Fahrzeugumgebung dadurch erhöht werden kann, dass der Wechsel zwischen zwei Beleuchtungseinstellung nicht ausschließlich, wie bisher üblich, durch ein Ereignis wie z.B. das Öffnen einer Fahrzeugtür erfolgt, sondern dass anstelle eines Ereignisses dieser Wechsel nach Ablauf einer vorbestimmten Zeitspanne seit einem Ereignis oder auch seit dem Ablauf einer vorherigen Zeitspanne erfolgt. So kann der Wechsel zwischen zwei Beleuchtungseinstellung nach Eintritt eines Ereignisses zeitlich verzögert werden oder auch eine zeitliche Abfolge von wechselnden Beleuchtungseinstellungen vorgegeben werden. Die erste Beleuchtungseinstellung wird somit für die Dauer der vorbestimmten Zeitspanne verwendet und nach Ablauf dieser durch die zweite Beleuchtungseinstellung ersetzt. Auf diese Weise kann z.B. eine erste Beleuchtungseinstellung wie eine aktivierte Ambientebeleuchtung in allen Fahrzeugtüren verwendet werden und nach einer vorbestimmten Verzögerung von z.B. zwei Sekunden zusätzlich die Fußraumbeleuchtung aktiviert werden. Würden diese beiden Beleuchtungen gleichzeitig z.B. beim Öffnen einer Fahrzeugtür aktiviert werden, würde die Fußraumbeleuchtung noch gar nicht bzw. nicht wirksam vom Fahrer oder anderen Insassen wahrgenommen werden, so dass es vorteilhaft ist, diese erst zeitverzögert hinzuzuschalten. Diese zeitliche Verzögerung erhöht den Gestaltungsspielraum bei der Erstellung von Beleuchtungskonzepten für Fahrzeuginnenräume bzw. deren Umfeld.

Vorzugsweise kann die Ausführung der ersten Beleuchtungseinstellung durch ein Ereignis veranlasst werden. Ein solches Ereignis kann z.B. das Öffnen einer Fahrzeugtür, Ladeflächen-, Heck- oder Kofferraumklappe, das Schließen einer Fahrzeugtür, Ladeflächen-, Heck- oder Kofferraumklappe, das Entriegeln bzw. Verriegeln des Fahrzeugs etc. sein. Durch ein solches Ereignis kann dann eine erste Beleuchtungseinstellung wie die Aktivierung der Ambientebeleuchtung z.B. in allen Fahrzeugtüren bewirkt werden, der zeitlich verzögert z.B. die zusätzlich Aktivierung der Fußraumbeleuchtung als zweite Beleuchtungseinstellung folgen kann.

Vorzugsweise kann die Ausführung der ersten Beleuchtungseinstellung durch den Ablauf einer weiteren vorbestimmten Zeitspanne veranlasst werden. Auf diese Weise können verschiedene Beleuchtungseinstellungen zeitlich nacheinander veranlasst werden, um das gewünschte Lichtkonzept durch eine zeitliche Abfolge von Beleuchtungseinstellungen umzusetzen. Z.B. kann beim Öffnen einer Fahrzeugtür die Aktivierung der Ambientebeleuchtung zeitlich um eine erste vorbestimmte Zeitspanne verzögert werden und erst nach dem Ablauf einer weiteren vorbestimmten Zeitspanne die Aktivierung der Fußraumbeleuchtung im Rahmen einer zweiten Beleuchtungseinstellung erfolgen. Hierdurch werden große Gestaltungsspielräume für die Beleuchtungskonzepte geschaffen und die Wahrnehmung des Beleuchtungsumfangs durch den Kunden verbessert.

Vorzugsweise ist die Dauer der Zeitspanne veränderbar. Hierdurch kann durch den Fahrer oder andere Insassen je nach persönlichem Geschmack Einfluss auf das Beleuchtungskonzept genommen werden, um dieses individuell anzupassen. Dabei wird von einer Grundeinstellung wie z.B. einer Werkeinstellung ausgegangen, die vorzugsweise gespeichert ist und jederzeit wieder aktiviert werden kann.

Vorzugsweise wird der Wechsel von der ersten Beleuchtungseinstellung in die zweite Beleuchtungseinstellung vor Ablauf der vorbestimmten Zeitspanne durch ein Ereignis veranlasst. Auf diese Weise ist es möglich, flexibel auf eine zeitlich vorgegebenen Ablauf von Beleuchtungseinstellungen zu reagieren, falls z.B. vom Fahrer Handlungen außerhalb des erwarteten Ablaufs bzw. diese schneller als zeitlich vorgesehen vorgenommen werden. Ist z.B. ein zeitlicher Ablauf von Beleuchtungseinstellungen vorgesehen, der mit dem Öffnen der Fahrertür einsetzt, so kann diese beschleunigt oder abgebrochen werden, falls sich z.B. der Fahrer sehr schnell auf den Fahrersitz setzt bzw. die Zündung betätigt und hierdurch eine weitere Beleuchtungseinstellung auslöst, noch bevor der bereits begonnen Ablauf der Beleuchtungseinstellungen abgearbeitet war. Eine solche ereignisorientierte Steuerung kann z.B. Signale der Sitzbelegungserkennung und bzw. oder Türschließsensorik involvieren.

Erfindungsgemäß wird in die zweite Beleuchtungseinstellung in Abhängigkeit der Einstellung der Außenbeleuchtung des Fahrzeugs gewechselt. Unter der Außenbeleuchtung werden Standlicht oder Abblendlicht verstanden, wobei diese Lichteinstellungen des Fahrzeugs auf Dunkelheit oder zumindest eingeschränkte Sichtverhältnisses für den Fahrer hindeuten. Diese Information kann den entsprechenden Schaltern etc. der Fahrerarmatur oder des MMI (Mensch-Maschine-Interface) des Fahrzeugs entnommen oder auch mittels entsprechender Sensoren erfasst werden. Die Berücksichtigung dieser Information ist vorteilhaft, da bei ausreichender Helligkeit am Tage andere Beleuchtungseinstellungen gewählt werden sollten als bei Nacht bzw. getrübter Sicht. Somit kann ein Wechsel in die zweite Beleuchtungseinstellung z.B. nur dann erfolgen, falls die Außenbeleuchtung aktiviert ist bzw. je nach der Einstellung der Außenbeleuchtung in verschiedene Beleuchtungseinstellungen gewechselt werden.

Vorzugsweise ist wenigstens ein Teil der Parameter wenigstens einer der Beleuchtungseinstellungen veränderbar. So kann z.B. die Helligkeit für den gesamten Innenraum einheitlich für eine Beleuchtungseinstellung durch den Fahrer oder andere Insassen vorgegeben werden oder unterschiedlich für einzelne Bereiche oder Zonen des Innenraums wie z.B. den Fußraum, den Türbereich, den Dachbereich etc. Weitere Zonen können z.B. die Mittelkonsole, weitere Konsolen, die Sitze oder das Cockpit sein, denen weitere Lichtquellen wie z.B. die I-Tafelbeleuchtung, Reiter, Cupholder etc. zugeordnet werden können. Auf diese Weise können die Beleuchtungseinstellungen individuell angepasst werden. Dabei wird von Grundeinstellungen z.B. gemäß Werkeinstellung ausgegangen, die vorzugsweise gespeichert ist und jederzeit wieder aktiviert werden kann. Vorzugsweise kann der Übergang zwischen zwei Beleuchtungseinstellungen unmittelbar oder gedimmt erfolgen. Hierdurch kann der Wechsel der Beleuchtungseinstellung sowohl abrupt als auch langsam übergehend erfolgen, was ebenfalls den Gestaltungsspielraum bei der Konzeption von Beleuchtungseinstellungen erhöht. Auch kann das Dimmverhalten durch den Benutzer vorgegeben sowie auf eine Grundeinstellung zurückgesetzt werden.

Gemäß einem Aspekt der vorliegenden Erfindung betrifft diese auch eine Vorrichtung zur Einstellung der Beleuchtung des Innenraums eines Fahrzeugs mit einer Mehrzahl von Beleuchtungsmitteln, welche unabhängig voneinander aktivierbar sind, und einer Steuerungseinheit, welche vorgesehen ist, die Beleuchtungsmittel gemäß dem zuvor beschriebenen Verfahren anzusteuern.

Eine derartige Vorrichtung wird durch die Beleuchtungsmittel im Innenraum des Fahrzeugs und eine Fahrzeugsteuerung wie z.B. dem BCM (Body Control Modul) gebildet. Die Steuerungseinheit kann auch mittels Software als Funktion implementiert sein. Dabei kann die Vorrichtung auch Informationen wie z.B. das Auftreten von Ereignissen wie z.B. dem Öffnen einer Fahrzeugtür erhalten, z.B. durch Sensoren in den Drehfallen der Türschlösser, die im Rahmen des erfindungsgemäßen Verfahrens zur Aktivierung einer Beleuchtungseinstellung verwendet werden können. Ferner kann die Vorrichtung Eingabemittel umfassen, die der Veränderung der Beleuchtungseinstellung durch z.B. den Fahrer dienen.

Gemäß einem weiteren Aspekt betrifft die vorliegende Erfindung auch ein Fortbewegungsmittel, vorzugsweise ein Fahrzeug mit einer derartigen Vorrichtung. Nachfolgend werden Ausführungsbeispiele der Erfindung unter Bezugnahme auf die begleitenden Zeichnungen im Detail beschrieben. In den Zeichnungen ist:
- Figur 1: eine schematische perspektivische Darstellung eines Fahrzeugs mit einer Vorrichtung zur Ausführung des erfindungsgemäßen Verfahrens;
- Figur 2: eine schematische Blockdarstellung einer Vorrichtung zur Ausführung des erfindungsgemäßen Verfahrens; und
- Figur 3: eine schematische Ablaufdarstellung des erfindungsgemäßen Verfahrens.

### Ausführungsbeispiele der Erfindung

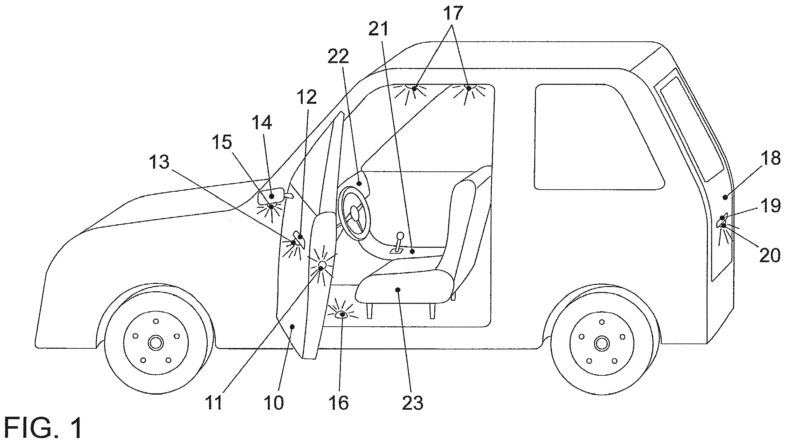

Figur 1 zeigt eine schematische perspektivische Darstellung eines Fortbewegungsmittels 1 wie z.B. ein Fahrzeug 1 mit einer Vorrichtung zur Ausführung des erfindungsgemäßen Verfahrens. Das Fahrzeug 1 weist wenigstens eine Fahrzeugtür 10 auf, an dessen Innenseite zum Innenraum des Fahrzeugs 1 hin bzw. dessen Kanten Beleuchtungsmittel 11 vorgesehen sind, die als Beleuchtung 11 der Fahrzeugtür 10 bezeichnet werden können; diese kann auch Beleuchtungsmittel an oder in der Türinnenverkleidung außer der Beleuchtung in der Türinnenbetätigung umfassen. Ferner weist die Fahrzeugtür 10 einen Türaußengriff 12 mit Beleuchtungsmitteln 13 auf, die vorzugsweise zur Ausleuchtung des Umfeldes des Türaußengriffs 12 vorgesehen sind. Ebenso weist die Fahrzeugtür 10 einen Außenspiegel 14 mit Beleuchtungsmitteln 15 auf. Im Innenraum des Fahrzeugs 1 sind Beleuchtungsmittel 16 im Fußraum sowie Beleuchtungsmittel 17 im Deckenbereich (z.B. Deckenhimmel) vorgesehen, die als Fußraumbeleuchtung 16 bzw. Deckenbeleuchtung 17 bezeichnet werden können. Ferner weist das Fahrzeug 1 eine Heckklappe 18 oder auch Kofferraumklappe 18 auf mit einem entsprechenden Griff 19 auf, der ebenfalls eine Beleuchtung 20 aufweist. Weist ein Fahrzeug 1 eine Ladefläche auf, so kann diese ebenfalls eine Beleuchtung aufweisen, ebenso dessen Ladeklappe, falls vorhanden. Schließlich weist das Fahrzeug 1 eine Beleuchtung 21 einer Mittelkonsole, eine Beleuchtung 22 eines Cockpits und eine Beleuchtung wenigstens eines Sitzes 23 auf.

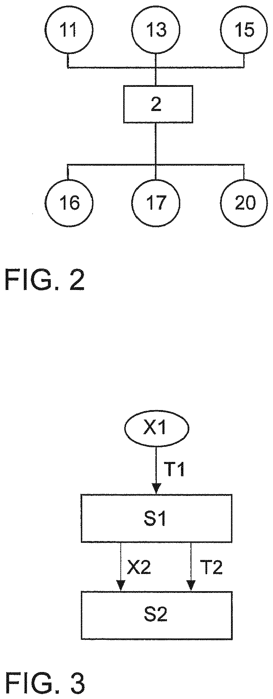

Diese Beleuchtungsmittel 11, 13, 15, 16, 17, 20, 21, 22, 23 werden durch eine Steuerungseinheit 2 angesteuert und hierdurch aktiviert bzw. deaktiviert sowie in der Helligkeit, d.h. ihrer Intensität und ggfs. Farbwahl eingestellt, siehe Figur 2. Dabei können mehrere Beleuchtungsmittel 11, 13, 15, 16, 17, 20, 21, 22, 23 und ihrer Einstellungen in verschiedenen Beleuchtungseinstellungen zusammengefasst werden, zwischen denen dann mittels der Steuerungseinheit 2 gewechselt wird. Mehrere aufeinander abgestimmte und aufeinanderfolgende Beleuchtungseinstellungen können als Beleuchtungskonzept bezeichnet werden.

Ein solches Beleuchtungskonzept zum Einsteigen wenigstens des Fahrers des Fahrzeugs 1 kann wie folgt ablaufen:
Der Fahrer entriegelt das Fahrzeug 1. Dies kann mittels eines Schließzylinders in der Fahrzeugtür 10, eines Funkschlüssels oder auch eines sonstigen schlüssellosen Zugangssystems erfolgen. Im Ansprechen auf dieses Ereignis des Entriegelns werden das Innenlicht im Dachbereich 17 und die Umfeldbeleuchtung in Form der Beleuchtung 13 der Türaußengriffe 12 und der Beleuchtung 15 der Außenspiegel 14 mit maximaler Helligkeit aktiviert.

Öffnet nun der Fahrer eine entriegelte Fahrzeugtür 10, was durch das Fahrzeug 1 z.B. mittels Sensoren in den Drehfallen der Türschlösser erkannt werden kann, wird dies als ein Ereignis X1 gewertet, welches eine Ausführungsform eines erfindungsgemäßen Verfahrens auslösen kann, wie in der Figur 3 dargestellt. Nach Eintritt dieses Ereignisses X1 wird erfindungsgemäß eine vorbestimmte erste Zeitspanne T1 abgewartet, welche z.B. 0,5 Sekunden betragen kann, und dann eine Beleuchtungseinstellung S1 aktiviert, die die vorherige Beleuchtungseinstellung ablöst. So wird nach Ablauf dieser ersten Zeitspanne T1 die Beleuchtung 11 aller Fahrzeugtüren 10 mit maximaler Helligkeit aktiviert. Nach Ablauf einer zweiten Zeitspanne T2 von z.B. 1,5 Sekunden bzw. 2,0 Sekunden seit dem Öffnen der Tür wird zusätzlich die Innenbeleuchtung 16 des Fußraums als Beleuchtungseinstellung S2 aktiviert. Diese Aktivierung könnte durch ein weiteres Ereignis X2 auch vor Ablauf der zweiten Zeitspanne T2 erfolgen.

Nach dem Schließen der letzten Fahrzeugtür 10, welches ebenfalls mittels Sensoren in den Drehfallen der Türschlösser erkannt werden kann, werden alle Beleuchtungsmittel 11, 16, 17 des Innenraums von der maximalen Helligkeit auf einen vorbestimmten, z.B. 75 %, oder vordefinierten Wert heruntergedimmt; dabei können für die verschiedenen Zonen 11, 16, 17 auch verschiedene Werte verwendet werden. Nach Einschalten der Zündung werden die Beleuchtungsmittel der Deckenbeleuchtung 17, vorzugsweise gedimmt, ausgeschaltet und gleichzeitig die Beleuchtung 11 in den Türen und im Fußraum 16 auf einen vorbestimmten, z.B. 30 %, oder anwenderseitig festgelegten Wert heruntergedimmt, sofern die Außenbeleuchtung des Fahrzeugs 1 aktiviert ist, was z.B. durch einen Lichtdrehschalter in der Stellung Standlicht oder Abblendlicht oder bei Autostellung durch Erkennung der Dunkelheit erkannt werden kann. Ist die Außenbeleuchtung nicht aktiviert, z.B. der Lichtdrehschalter steht auf Nullstellung oder bei Autostellung wird eine ausreichende Außenhelligkeit erkannt, bei der kein Abblendlicht automatisch aktiviert wird, so wird die Beleuchtung 11 in den Türen und die Fußraumbeleuchtung 16 ausgeschaltet, vorzugsweise gedimmt.

Ein analoges Beleuchtungskonzept zum Aussteigen wenigstens des Fahrers des Fahrzeugs 1 kann wie folgt ablaufen:
Beim Ausschalten des S-Kontaktes (Zündschlosskontakt) durch den Fahrer, z.B. durch Abziehen des Zündschlüssels, werden alle Beleuchtungsmittel 11, 16, 17 des Innenraums unmittelbar auf einen vorgegebenen, z.B. 75 %, oder einstellbaren Wert hochgedimmt. Dabei sind die Helligkeit und das Dimmverhalten für jede Zone 11, 16, 17 individuell einstellbar. Beim Öffnen einer ersten Fahrzeugtür 10 nach Ausschalten des S-Kontaktes werden die Deckenbeleuchtung 17 und die Umfeldbeleuchtung, d.h. die Beleuchtung 13 der Türaußengriffe und die Beleuchtung 15 der Außenspiegel 14, ohne zeitliche Verzögerung auf maximale Helligkeit gedimmt. Nach Ablauf einer vorbestimmten Zeitspanne T1 von z.B. 0,5 Sekunden seit dem Ereignis X1 des Türöffnens wird die Fußraumbeleuchtung 16 auf maximale Helligkeit umgeschaltet. Nach Ablauf einer weiteren vorbestimmten Zeitspanne T2 von z.B. 2,0 Sekunden wird die Türbeleuchtung 11 auf maximale Helligkeit umgeschaltet.

Nach dem Schließen der letzten geöffneten Fahrzeugtür 10 werden alle Beleuchtungsmittel 11, 16, 17 des Innenraums von maximaler Helligkeit auf einen vorbestimmten Wert von z.B. 75 % heruntergedimmt. Diese Beleuchtungseinstellung wird z.B. für 30 Sekunden beibehalten. Nach Ablauf dieser Zeitspanne oder falls vorher ein Ereignis wie das Verriegeln des Fahrzeugs 1 durch den Fahrer über Schließzylinder, Funkschlüssel oder schlüsselloses Zugangssystems erfolgt (Ereignis X2), werden alle Beleuchtungsmittel 11, 16, 17 des Innenraums deaktiviert.

Auch wenn die erfindungsgemäßen Aspekte und vorteilhaften Ausführungsbeispiele anhand der in Verbindung mit den beigefügten Zeichnungen erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zur Einstellung der Beleuchtung des Innenraums eines Fortbewegungsmittels (1) mit den Schritten:
Ausführen einer ersten Beleuchtungseinstellung (S1) für eine Beleuchtung des Innenraums, und
Ausführen einer zweiten Beleuchtungseinstellung (S2) für eine Beleuchtung des Innenraums welche wenigstens ein Betreiben eines Beleuchtungsmittels (11, 16, 17, 21, 22, 23) umfasst, das eine gegenüber der ersten Beleuchtungseinstellung (S1) veränderte Helligkeit und/oder Farbe und/oder Frequenz aufweist,
wobei der Wechsel von der ersten Beleuchtungseinstellung (S1) in die zweite Beleuchtungseinstellung (S2) nach Ablauf einer vorbestimmten Zeitspanne (T2), also zeitlich verzögert, erfolgt,
**dadurch gekennzeichnet, dass** der Wechsel von der ersten Beleuchtungseinstellung (S1) in die zweite Beleuchtungseinstellung (S2) in Abhängigkeit einer Einstellung einer Außenbeleuchtung, umfassend Standlicht oder Abblendlicht, erfolgt.

2. Verfahren nach Anspruch 1,
wobei die Ausführung der ersten Beleuchtungseinstellung (S1) durch ein erstes Ereignis (X1) veranlasst wird.

3. Verfahren nach Anspruch 1 oder 2,
wobei die Ausführung der ersten Beleuchtungseinstellung (S1) durch den Ablauf einer weiteren vorbestimmten Zeitspanne (T1) veranlasst wird.

4. Verfahren nach einem der vorherigen Ansprüche,
wobei die Dauer der Zeitspanne (T1, T2) durch einen Anwender veränderbar ist.

5. Verfahren nach einem der vorherigen Ansprüche,
wobei der Wechsel von der ersten Beleuchtungseinstellung (S1) in die zweite Beleuchtungseinstellung (S2) vor Ablauf der vorbestimmten Zeitspanne (T2) durch ein zweites Ereignis (X2) veranlasst wird.

6. Verfahren nach einem der vorherigen Ansprüche,
wobei die Helligkeit und/oder Farbe und/oder Frequenz wenigstens einer der Beleuchtungseinstellungen (S1, S2) durch einen Anwender veränderbar ist.

7. Verfahren nach einem der vorherigen Ansprüche,
wobei der Übergang zwischen zwei Beleuchtungseinstellungen (S1, S2) unmittelbar oder gedimmt erfolgt.

8. Vorrichtung zur Einstellung der Beleuchtung des Innenraums eines Fortbewegungsmittels (1), mit einer Mehrzahl von Beleuchtungsmitteln (11, 16, 17, 21, 22, 23), welche unabhängig voneinander aktivierbar sind, und
einer Steuerungseinheit (2), welche vorgesehen ist, die Beleuchtungsmittel (11, 16, 17, 21, 22, 23) gemäß einem Verfahren nach einem der vorherigen Ansprüche anzusteuern.

9. Fortbewegungsmittel (1), vorzugsweise Fahrzeug (1), mit
einer Vorrichtung nach Anspruch 8.

## Claims

1. Method for setting the illumination of the interior of a means of transport (1), having the steps of:
performing a first illumination setting (S1) for illuminating the interior, and
performing a second illumination setting (S2) for illuminating the interior, which comprises at least operating one illumination means (11, 16, 17, 21, 22, 23), which has a brightness and/or colour and/or frequency that has been changed compared to the first illumination setting (S1),
wherein the change from the first illumination setting (S1) to the second illumination setting (S2) takes place after a predetermined time period (T2) has expired, that is to say with a temporal delay,
**characterized in that** the change from the first illumination setting (S1) to the second illumination setting (S2) takes place in dependence on a setting of an exterior illumination, comprising sidelights or dipped beam.

2. Method according to Claim 1, wherein the performance of the first illumination setting (S1) is caused by a first event (X1).

3. Method according to Claim 1 or 2, wherein the performance of the first illumination setting (S1) is caused by a further predetermined time period (T1) having expired.

4. Method according to one of the preceding claims, wherein the duration of the time period (T1, T2) is changeable by a user.

5. Method according to one of the preceding claims, wherein the change from the first illumination setting (S1) to the second illumination setting (S2) before the predetermined time period (T2) has expired is caused by a second event (X2).

6. Method according to one of the preceding claims, wherein the brightness and/or colour and/or frequency of at least one of the illumination settings (S1, S2) is changeable by a user.

7. Method according to one of the preceding claims, wherein the transition between two illumination settings (S1, S2) is immediate or takes place by dimming.

8. Apparatus for setting the illumination of the interior of a means of transport (1), having
a plurality of illumination means (11, 16, 17, 21, 22, 23), which are activable independently from one another, and
a control unit (2), which is provided for controlling the illumination means (11, 16, 17, 21, 22, 23) in accordance with a method according to one of the preceding claims.

9. Means of transport (1), preferably vehicle (1), having an apparatus according to Claim 8.

## Revendications

1. Procédé de réglage de l'éclairage de l'espace intérieur d'un moyen de déplacement (1), le procédé comprenant les étapes suivantes :
effectuer un premier réglage d'éclairage (S1) qui est destiné à éclairer l'espace intérieur, et
effectuer un deuxième réglage d'éclairage (S2) qui est destiné à éclairer l'espace intérieur et qui comprend au moins une opération d'un moyen d'éclairage (11, 16, 17, 21, 22, 23) qui présente une luminosité et/ou une couleur et/ou une fréquence qui sont modifiées par rapport à celles du premier réglage d'éclairage (S1),
le passage du premier réglage d'éclairage (S1) au deuxième réglage d'éclairage (S2) étant effectué après expiration d'un intervalle de temps prédéterminé (T2), c'est-à-dire de manière retardée,
**caractérisé en ce que** le passage du premier réglage d'éclairage (S1) au deuxième réglage d'éclairage (S2) est effectué en fonction d'un réglage d'un éclairage extérieur, comprenant des feux de position ou des feux de croisement.

2. Procédé selon la revendication 1,
le premier réglage d'éclairage (S1) étant effectué par intervention d'un premier événement (X1).

3. Procédé selon la revendication 1 ou 2,
le premier réglage d'éclairage (S1) étant effectué par expiration d'un autre intervalle de temps prédéterminé (T1).

4. Procédé selon l'une des revendications précédentes,
la durée de l'intervalle de temps (T1, T2) pouvant être modifiée par un utilisateur.

5. Procédé selon l'une des revendications précédentes,
le passage du premier réglage d'éclairage (S1) au deuxième réglage d'éclairage (S2) étant effectué sur intervention d'un deuxième événement (X2) avant expiration de l'intervalle de temps prédéterminé (T2).

6. Procédé selon l'une des revendications précédentes,
la luminosité et/ou la couleur et/ou la fréquence d'au moins un des réglages d'éclairage (S1, S2) pouvant être modifiées par un utilisateur.

7. Procédé selon l'une des revendications précédentes,
la transition entre deux réglages d'éclairage (S1, S2) étant effectuée directement ou de manière atténuée.

8. Dispositif de réglage de l'éclairage de l'espace intérieur d'un moyen de déplacement (1), ledit dispositif comprenant
une pluralité de moyens d'éclairage (11, 16, 17, 21, 22, 23) qui peuvent être activés indépendamment les uns des autres, et
une unité de commande (2) qui est prévue pour commander les moyens d'éclairage (11, 16, 17, 21, 22, 23) conformément à un procédé selon l'une des revendications précédentes.

9. Moyen de déplacement (1), de préférence véhicule (1), comprenant un dispositif selon la revendication 8.
